**Europäisches Patentamt**

**European Patent Office**

**Office européen des brevets**

(19)

(11) **EP 0 978 738 A1**

(12) **EUROPEAN PATENT APPLICATION**

(43) Date of publication:
**09.02.2000 Bulletin 2000/06**

(51) Int Cl.[7]: **G02B 6/16**

(21) Application number: **98306183.9**

(22) Date of filing: **03.08.1998**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI** | (72) Inventor: **The designation of the inventor has not yet been filed** |
| (71) Applicant: **BRITISH TELECOMMUNICATIONS public limited company**<br>**London EC1A 7AJ (GB)** | (74) Representative:<br>**Roberts, Simon Christopher et al**<br>**BT Group Legal Services,**<br>**Intellectual Property Department,**<br>**8th Floor, Holborn Centre**<br>**120 Holborn**<br>**London, EC1N 2TE (GB)** |

(54) **Apparatus and method for generating an interference pattern to be written as a grating in a sample of a photosensitive material**

(57)     An apparatus and method for generating an interference pattern to be written as a grating in a sample of photosensitive material wherein the interference pattern to be written is tunable using at least two moveable reflectors. An incident UV beam is passed through a phase mask, which functions as a beam splitter. The interference pattern produced by the phase mask is tuned by the reflectors before being incident on the photosensitive material. A Bragg grating is written in the photosensitive material whose Bragg wavelength is determined, in combination with other parameters, by the incident tuned interference pattern. This apparatus and method allow wide tunability of the Bragg wavelength of the gratings formed using the same phase mask.

# Fig.2.

Cylindrical lens
1
UV Beam
2
A →
3 — Phase mask
4
C →
Mirrors Counter-Rotatable And Laterally Translatable in Opposite Directions
6,6ᴵ
Zero-order block
θ/2
7,7ᴵ
5
B →
9,9ᴵ  Rotation for Blaze
L
10
Fibre
8,8ᴵ

EP 0 978 738 A1

## Description

This invention concerns an apparatus and method for forming an interference pattern in a photosensitive material, wherein the interference pattern formed may be tuned; and has particular, but not exclusive, application to forming refractive index diffraction gratings in optical fibres. These gratings are also known as fibre Bragg gratings. The invention, however, also has application in other waveguides, such as planar, rib, ridge or buried waveguides, as well as any other photosensitive material such as films, or other bulk materials.

It is known that the refractive index of a photosensitive material, such as an optical fibre or other waveguide can be altered by exposing it to high intensity UV radiation. Germanium doped silica fibre exhibits a photosensitivity in this manner and the effect can be used to form permanent refractive index pattern gratings in the waveguide. The grating may be produced by forming an interference pattern from two interfering radiation beams, and exposing the photosensitive material to the interference pattern so as to write this interference pattern as a permanent refractive index pattern grating in the photosensitive material. The grating formed in fibre, depending on the writing criteria, exhibits particular reflective characteristics, wherein radiation at a particular wavelength is reflected by the grating. This particular wavelength of radiation is referred to as the Bragg wavelength. The actual wavelength of the radiation reflected is determined by the refractive index pattern formed. Such patterns formed in photosensitive materials such as optical fibres, as refractive index pattern gratings, have become important components in a wide variety of applications in data communications systems, such as WDM, broadband, high speed and long distance transmission, as, for example, discussed by Kashyap "Photosensitive Optical Fibres: Devices and Applications" Optical Fibre Technology 1, 17-34 (1994).

Refractive index pattern gratings, for example, are used to separate information from adjacent WDM channels. Conventionally, optical telecommunications networks transmit data in channels centred on 1.3 micrometers and 1.5 micrometers. In either of these wavelength regions ("windows"), a refractive index diffraction grating can be used to reflect out a narrow wavelength channel of the order of 1nm or less in width, in order to permit WDM demultiplexing. A series of gratings can be provided to select individual closely spaced channels. The gratings exhibit a main wavelength peak centred on the wavelength of the channel to be filtered, but each grating also exhibits a series of side-lobes at harmonics of the wavelength peak, which produce reflection in adjacent channels, resulting in cross-talk. As a result, it has proved necessary to modify or apodise the gratings so as to suppress the effect of the side-lobes and reduce the cross talk.

As the number of applications and uses for interference pattern gratings have increased, it has become ever more necessary to be able to produce easily different types of gratings having different characteristics, in particular, reflectivity characteristics. A major consideration for the fabrication of gratings is the flexibility and tuneability of the grating writing system needed to produce a wide variety of different types of grating according to the particular application. Several techniques are known for changing the so-called Bragg wavelength of the grating at the time the grating is written. For example, WO 86/01303 discloses a system using a beam splitter and a dual mirror arrangement, and although this system possesses some flexibility, it requires very careful setting up. If a grating having, for example, a different spacing is to be written. Firstly, the mirrors are adjusted, and secondly, the source also has to be realigned with the beam splitter in order to achieve reflection of the newly positioned mirrors. Furthermore, because a conventional beamsplitter is used, there is no absolute reference for the Bragg wavelength is available. Using this technique, it is not possible to write chirped gratings, which are required in filter applications such as dispersion management etc, without introducing dissimilar wavefronts, which can only be dealt with using cumbersome optics. The introduction of phase masks has partially solved this problem: for example, in K.O.Hill et al "Bragg Grating Fabricated in Monomode Photosensitive Fibre by Ultraviolet Exposure through a Phase mask" Applied Physics Letters Volume 62 number 10, 1035 (1993), the refractive index pattern may be formed by directing an incident beam through a phase mask, in which the desired amplitude pattern has been recorded holographically as a phase mask pattern. The phase mask is placed in direct contact with the fibre and the illuminated laser light is directed at the phase mask, so as to expose the underlying waveguide to the holographic pattern. This technique, however, suffers the disadvantage that since the fibre is in direct contact or close proximity with the phase mask, the delicate and expensive phase mask is easily damaged by the fibre touching it. Such a system is therefore, considered to be unsuitable for use in a manufacturing environment.

Another method of forming a grating using a phase mask is disclosed in P.Y.Cortes et al "Intrinsic Apodisation of Bragg Gratings written using UV-Pulse Interferometry", Electronic Letters Volume 34 number 4, page no XXX, 19 February 1998. According to this method, the phase mask is also positioned directly on the optical fibre. Ultraviolet light, which is directed through the phase mask and fibre is then reflected by two mirrors positioned behind the phase mask and fibre and directed back to the fibre where the refractive index pattern is formed and the diffraction grating is written. Both the mirrors are arranged at oblique angles to the phase mask of approximately 45 degrees, behind the phase mask and fibre. In addition, the mirrors may be moved both towards and away from the phase mask and fibre. This arrangement enables the Bragg wavelength of the interfering radiation on the fibre to be tuned, but also has the effect of changing the position of the refractive index pattern along the fibre. This arrangement suffers from the same disadvantage as arrangement described in the Hill et al paper in that the fibre may damage the delicate phase mask. Further disadvantages are that the interference beam undergoes two reflections and requires focussing after the first reflection before it can be written into the fibre. This further complicates the apparatus. The grating written is reflected back to the fibre and written in a portion of the fibre further along it. Therefore, as the Bragg wavelength is changed the position of the grating to be formed is also shifted along the fibre. This requires compensation. To correctly align the mirrors, in order to achieve the desired refractive index pattern on the fibre, fine adjustment of the mirrors is required. This is particularly difficult because the obliquely positioned mirrors have no easily identifiable reference point. So again, this system is unsuitable for a manufacturing environment.

Another system is disclosed in our own patent application WO97/22023(case number A25095). In this prior art arrangement shown in Figure 1, light from a laser source is directed through a phase mask, which acts as a beam splitter so as to form two phase coherent beams which pass through respective reflective corner cubes so as to be reflected back to two mirrors. The mirrors are adjusted so as to reflect the beams along paths, which converge at an angle upon the photosensitive optical fibre. The two beams interfere and produce a refractive index pattern in the fibre. Again, the main disadvantage of this arrangement is that it is complex: the corner cubes and the mirrors have to be carefully aligned and adjusted so as to converge the split beams correctly upon the optical fibre and cannot be tuned. Once set up, the blocks and mirrors cannot be moved, to tune the interfering beams. The arrangement does have the advantage that the fibre and phase mask are not in contact with each other and hence, damage to the phase mask can be avoided.

The use of phase masks, as described in the three examples above, has enabled different types of grating to be written, since each phase mask has its own characteristic amplitude pattern which is reproduced as an interference pattern in the waveguide. For example, a single chirped phase mask can be used to produce a chirped grating. In addition, the phase mask can provide a wavelength reference because the phase mask is designed so that the grating produced using a particular phase mask will reflect radiation at at least one particular, predetermined wavelength. However, if a different type of grating having, for example, a different spacing is needed, it is necessary to replace the phase mask. Furthermore, because the mirrors are arranged at oblique angles in the previously described arrangements where phase masks and mirrors are used, there is a further requirement that the mirrors also have to be realigned for each phase mask, or indeed, that the phase mask has to be changed. In the systems described in the prior art, this requires that the whole refractive index pattern forming apparatus be dismantled and set-up for the second phase mask. So, although, chirped gratings, can be produced by using a chirped phase mask, if a second grating requiring a second phase mask is required, the whole apparatus requires cumbersome adjustment. In particular, the mirrors have to be carefully realigned in order to ensure that the interference pattern overlaps correctly with the waveguide. Previously, to achieve even a small degree of tunability of the interfering radiation beams, it has been necessary to either pre-stretch the optical fibre before writing, or to tilt the fibre behind the phase mask. Both of which suffer from the disadvantages that they are difficult to carry out accurately and to the extent that would result in a large tuneability.

Inspite of the varied and complex techniques described to achieve a small amount of tunability, until now it has not been possible to change the Bragg wavelength of the grating by more than a few nanometers without having to change the phase mask or provide complicated optics which increase the complexity and size of the apparatus.

The present invention seeks to provide an apparatus and method which mitigates, at least in part, some of the problems encountered in the techniques described in the prior art.

In accordance with the present invention, there is provided an apparatus and method as defined in the appended claims.

With embodiments of the present invention it is possible to provide a compact apparatus which has a large tuneability of the Bragg wavelength over a wide wavelength range. The apparatus is simple to align in a zero reference position, in which position a wavelength reference for easy calibration is provided. The compact design of the apparatus of the present invention is such that the beam is reflected a minimum number of times before being written into the photosensitive material and thus takes the shortest possible path between the optical beam input and the photosensitive material. Furthermore, because the input beam is not passed through the photosensitive material before being incident in the photosensitive material, it may be focussed at any time, for example, before it enters the apparatus, thus further simplifying the apparatus.

The fabrication of complex superimposed gratings from interference patterns, which previously have required the use of several different phase masks can thus be made simpler as a result of the tunability of the interference pattern forming apparatus. A further advantage is that the apodisation (modification) of the pattern formed is made extremely simple. Apodisation is desirable, especially in complex superimposed gratings to preserve the superimposed gratings' reflective characteristics. Embodiments of the invention will now be described, by way of example only, with reference to the appended figures, in which:

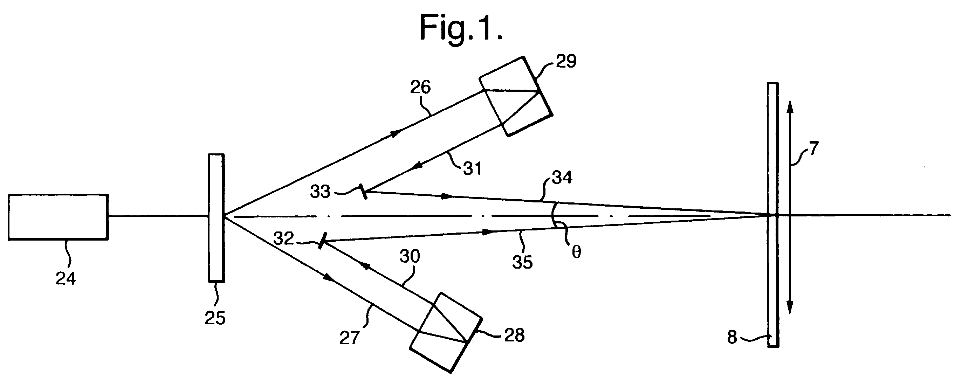

Figure 1 shows an apparatus for the production of gratings according to the prior art;
Figure 2 shows an example of an apparatus for the production of gratings in accordance with the invention;

Figure 3 shows a plot, produced for the apparatus of Figure 2 according to the present invention, of the change in the Bragg wavelength against the change of the mutual angle between the two interfering beams;

Figure 4 shows the transmission spectra of seven superimposed gratings written using apparatus according to the present invention;

Figure 5 shows a plot of transmission against wavelength for four chirped gratings written using apparatus, according to the invention;

Figure 5A shows how a chirped grating is written;

Figure 6 shows an apparatus for the production of gratings in a photosensitive material according to a second embodiment of the invention;

Figure 7 shows how symmetrical exposure is achieved according to a third embodiment of the present invention using the apparatus of Figure 2;

Figure 8 shows an apparatus for the production of gratings according to a fourth embodiment of the present invention; and

Figure 9 shows an apparatus for the production of gratings according to a fifth embodiment of the present invention.

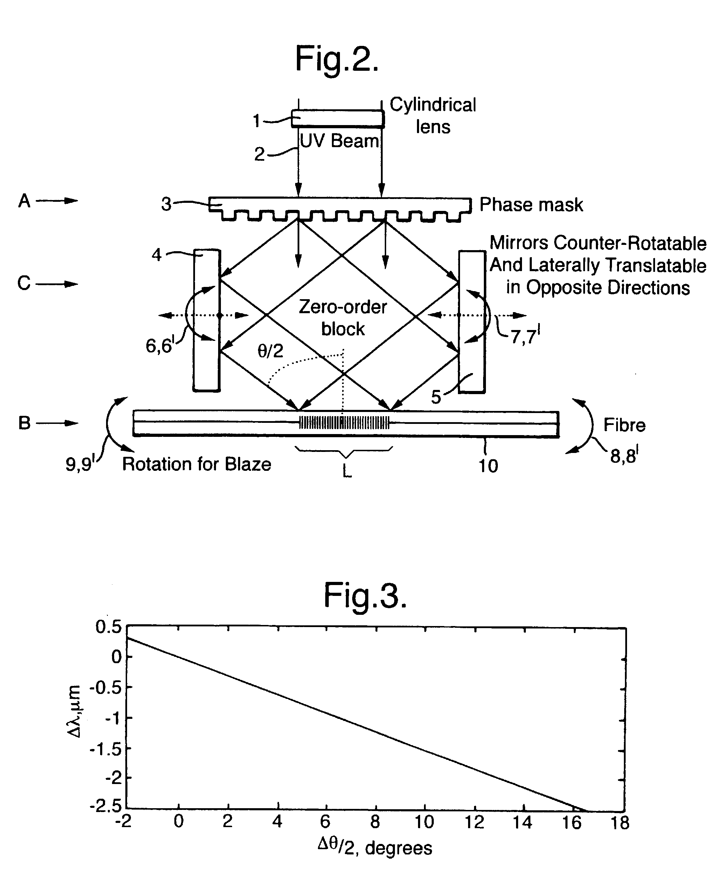

A first example of an apparatus for the production of gratings in accordance with the invention will now be described with reference to Figure 2.

In the example shown, the apparatus is divided into zones in which the optical element of the apparatus are disposed. The first zone A includes a first optical means, the second zone B includes a location where the photosensitive material is received, and the third zone C includes a second optical means. The third zone C is disposed between the first A and second zones B. The dimensions of the zones are such that they extend in space beyond those dimensions of the optical elements themselves. Thus, the third zone C is disposed between the first and second zones irrespective of the relative sizes of each optical element in each respective zone.

The photosensitive material is received at a location in the second zone B. In the example shown, the photosensitve material is a waveguide in the form of an optical fibre. However, any suitable photosensitive material, in any suitable form can be used: eg. planar waveguides, or even photosensitive films and bulk materials may be used.

In the example shown, a laser source (not shown) produces a beam of radiation. In the example, the radiation is ultraviolet radiation. However, any radiation which is capable of producing a refractive index change in the photosensitive material may be used. The beam may be shone directly at a phase mask or phase mask plate. However, it is preferable to dispose a cylindrical lens between the UV laser source and the phase mask to focus the beam with a predetermined spot size onto a phase mask or phase plate 3. In addition, to controlling the spot size of the laser, the lens may also be used to produce a line source, if this is desired. It is important that the laser source, lens and phase mask are correctly aligned, however, they are not necessarily fixed with respect to one another. The phase mask 3, or phase mask plate, is placed in the path of the focussed incident beam 2, to both form an interference pattern, but also to act as a beam splitter.

In the example shown, a phase mask is used. However, any optical means for generating an interference pattern may be used. In the present example, the phase is formed from a circular glass sheet. However, any other suitable shaped glass masks can be used: eg. square or rectangular, The phase mask is held rigidly in a phase mask holder which is mounted on a metal mount. By way of example, the metal mount used may be an xyz metal staged mount. An aperture is formed in the holder over which the phase mask is disposed. Around the aperture small magnets are in laid, so that they are flush with the top surface of the holder, or alternatively, the holder or mount themselves may be magnetic. The phase mask is therefore, rigidly mounted in the holder by the magnetic attraction of the magnets to the mount. This arrangement allows simple adjustment, such as rotation or vertical and horizontal translation (by rotation, vertical and horizontal translation) of the phase mask position. The rotational adjustment is performed manually or by use of a rotation stage. The vertical and horizontal translation is achieved by adjusting, either manually or automatically, the position of the xyz staged mount. Any phase mask may be used including chirped, unchirped, superstructure with phase stitches, DFB and apodised etc.

The incident radiation 2 passes through the phase mask 3 disposed over the aperture in the holder. Preferably, the grating to be written in the photosensitive material is written at a location aligned and facing the phase mask, thus simplifying the setting up of the apparatus. In the example discussed here UV radiation is chosen, however other radiation may be used. The radiation source is a UV laser, for example, an argon fluoride laser or krypton fluoride laser operating at 193nm or 248 nm, or a frequency doubled Argon ion laser operating at 244 or 257.1nm, a frequency quadrupled neodymium YLF laser operating at 262nm, a frequency quadrupled neodymium YAG laser operating at 266nm or a frequency doubled krypton ion laser operating at 323.5nm, or some equivalent.

After passing through the phase mask, interference pattern is tuned. The +1 and -1 orders are tuned by reflecting the orders by mirrors 4 and 5 to intersect at location L which receives a waveguide 10.

The recombining means may comprise any type of reflector such as mirrors, prisms or a combination may be used. Suitable reflectors are, for example, dielectric, aluminium, silver, gold, optically flat mirrors or totally internally reflecting prisms. In addition, prisms having a curved reflecting surface which imparts a phase change on reflection may also be used. Such prisms are disclosed, for example in US-A-5377288.

The mirrors are mounted on ganged-rotation stages, which are linked, so that the mirrors may be rotated in synchronism in opposite directions 6, 6', as well as translation stages so that the mirrors may be laterally translatable in synchronism in opposite directions 7, 7'. The apparatus is set up so that the mirrors 4, 5 are arranged parallel to one another, and normal to the plane of the phase mask and the longitudinal axis of the optical fibre. This arrangement is hereinafter referred to as the zero position. The wavelength of the reflected Bragg wavelength of the grating produced is determined by the phase mask, which has a phase pattern imprinted on it. The factors determining the reflective characteristics of the grating formed are the phase mask characteristics, the mirror position and the effective refractive index of the guided and reflection modes in the waveguide.

Furthermore, in the zero position, the following equation is obeyed:

$$\text{Lambda Bragg} = 2\, n\, \text{GAMMAm} \qquad\qquad \text{Equation 1,}$$

where Lambda Bragg represents the Bragg wavelength, n represents the effective refractive index of the fibre core and GAMMAm represents the period of the phase mask.

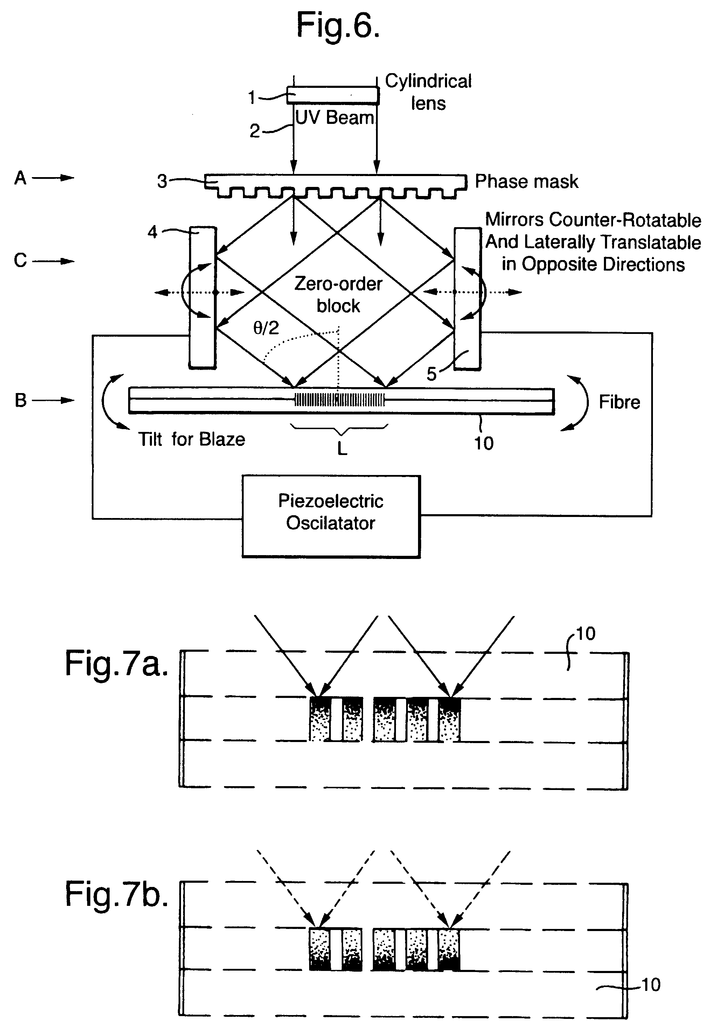

A Bragg wavelength reference is available in the zero reference position, when the zero order and the two interfering beams overlap spacially to interfere at fibre 10 with the initial parallel alignment of the mirrors 4, 5. The zero reference position is easy to achieve by aligning the mirrors. To a first approximation alignment can be achieved visually and with sufficient accuracy for the apparatus to function. However, fine alignment is achieved by measurement. For example: an optical technique whereby a reference laser source is directed at the mirrors and the reflections from the mirrors back to the laser source are used to determine whether the mirrors are aligned parallel to one another. At a wavelength of 1500nm, the angle subtended by the diffracted +1 and -1 orders of the phase mask makes an angle of approximately 80° to the mirror normal. By moving, by rotation, either one of the mirrors in one direction or both of the mirrors in opposite directions, the intersection angle can be altered and Bragg wavelength tuned. Furthermore, chirped gratings may be written with a chirped phase mask. The advantage of using a phase mask over a conventional beam splitter, is that it may have any grating pattern imprinted on it which, however, complex, can be repeatedly reproduced as a grating in the waveguide. In addition, the phase mask can be replicated in the fibre as a grating having a different period to that of the phase mask. This is achieved by virtue of being able to adjust the angle with which the interfering beams are incident on the optical fibre, since the angle of incidence determines the sinusoidal interference pattern formed on the fibre, and hence, the refractive index pattern formed; in particular the period of the grating formed and the respective Bragg wavelength. By varying the angle of incidence of the interfering beams, the Bragg wavelength of the grating formed in the fibre can be tuned to different wavelengths. In addition to the mirrors being both rotatable in opposite directions and laterally translatable 6, 6', 7, 7' the optical fibre 10 itself may also be rotated about a transverse axis at the mid point between the mirrors 9, 9', in the direction shown by arrows 9, 9', to write blazed diffraction gratings. In addition, further rotation of the fibre around its longitudinal axis 8, 8' facilitates the formation of symmetrical interference patterns as shown in Figure 7, and discussed hereinbelow.

Figure 3 shows how the Bragg wavelength, delta lambda, changes as a function of change in angle of mutual angle, delta theta, between the two interfering beams divided by two (delta theta/2) according to the present invention. A phase mask was used having a Bragg wavelength of 1550nm, where theta is approximately 10°. Where negative values in delta lambda are observed, this represents a shift to shorter wavelengths. As can be seen from Figure 3, a 5° change in the mutual angle between the interfering beams shifts the Bragg wavelength by approximately 800nm. As can be seen from Figure 3, there is a linear relationship between delta lambda and delta theta.

Further, the change, delta lambda in the Bragg wavelength, lambda Bragg, as a function of the change in the half angle, delta theta divided by 2 is given by

$$\frac{\Delta\lambda}{\lambda\text{Bragg}} = \frac{\Delta\theta}{2}\, \cot\frac{\theta}{2} \qquad\qquad \text{Equation 2,}$$

where, as above, theta is the mutual angle between the two interfering beams. The change in the Bragg wavelength is linearly proportional to the change in the angle delta theta around the initial "zero reference position" mutual angle of the interfering beams, theta. The zero reference position, as discussed above, being when the zero order and the two interfering beams overlap at fibre 10 with the initial parallel alignment of the reflectors 4, 5.

Using the apparatus of the present invention, it is possible not only to write a single grating in a portion of waveguide, but also possible to write a complex grating comprising several superimposed gratings (each having a different characteristic) in the same portion of waveguide using a single phase mask, wherein each grating written reflects radiation at its own characteristic Bragg wavelength (or indeed Bragg wavelengths in the case of chirped gratings written using chirped phase masks).

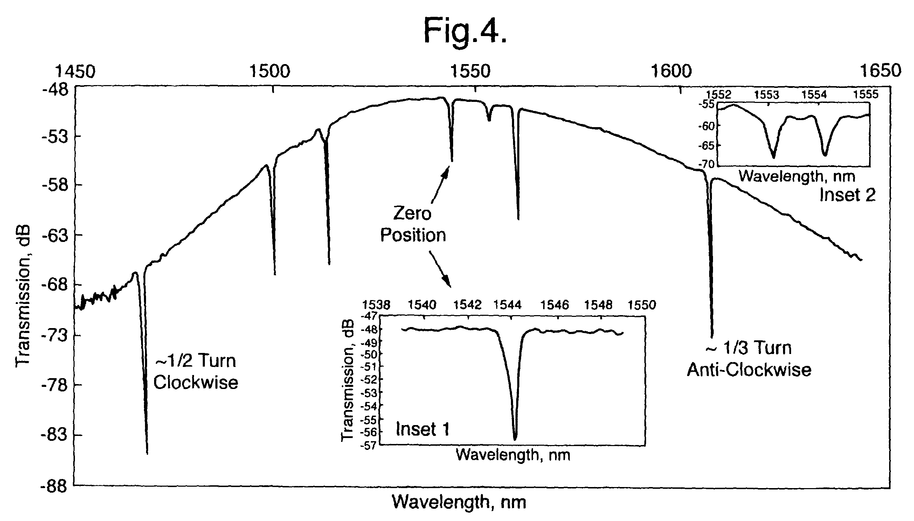

As an example, Figure 4 shows the transmission spectra of seven different gratings written in a single portion of fibre, according to the present invention, using a single common phase-mask. The phase mask used in this example, writes a grating whose Bragg wavelength is 1544nm when the mirrors are position in the zero position. This phase mask is referred to as having a zero position Bragg wavelength of 1 544nm.

As shown in Figure 4, using the apparatus of the present invention it is possible to superimpose gratings on one another in the same portion of fibre. Each grating formed, depending on the position of the mirrors and hence the angle of the incident interfering UV beams on the fibre, has its own Bragg wavelength. Hence, in the present example, the superimposed seven gratings of the present embodiment, can be used to reflect seven discrete wavelengths (corresponding to the Bragg wavelengths of each grating produced) from the same portion of fibre. The Bragg wavelengths of the gratings written in the present example vary from 1466nm to 1610nm. As discussed below this tuneability is achieved simply by rotating mirrors 4, 5 in opposite directions 6, 6'.

For comparison, Inset 1 of Figure 4 shows the transmission spectrum of a grating written using the same phase mask as those shown in the main figure, however, the grating shown in Inset 1 is at the phase mask designed wavelength, wherein the grating is written with the mirrors positioned parallel to one another in the zero reference position. The grating written in this way provides a wavelength reference which can be returned to once further gratings have been written, by rotating the mutually coupled mirrors 4, 5 back to the zero reference position.

It is particularly remarkable, that even though the Bragg wavelengths for the complex grating produced in Figure 4 changes from 1466 to 1610nm, no additional blaze has been imparted to the gratings.

It is to be noted that, if the mirrors are rotated 6, 6' beyond a certain angle, the incident angle of the interfering beam portions is changed so much that the interfering beams no longer overlap at the fibre. In this case, after each grating has been written with the mirrors rotated a certain amount, the optical fibre has to be repositioned after further rotation of the mirrors before the next grating is written. This repositioning of the optical fibre to ensure that the interference pattern overlaps at the fibre, is easily achieved by accurate visual alignment, although a simple modification will perform this task automatically. For small mirror rotations, however, this realignment of the fibre is not necessary. Alternatively, the separation between the mirrors can be adjusted without moving the fibre.

Each reflector 4, 5 is mounted on rotation stages (not shown) comprising a stage and rotation screws (not shown). The rotation screws for the opposing reflectors have opposite threads. Rotation of the reflectors is achieved by turning the screws. It has been found that only a small rotation of the reflector's adjustment screws (not shown) is necessary to significantly shift the Bragg wavelength. For example, rotating the adjustment screws by approximately one-quarter turn clockwise or one third of a turn anti-clockwise shifts the Bragg wavelength from 1461 to 1610nm. The shift in the Bragg wavelength of the grating formed is non-linearly related to the degree of rotation of the mirrors. The change in Bragg wavelength for a particular turn is, of course, determined by the pitch of the thread of the screws. In addition, because the angle of rotation of the mirrors necessary to achieve a substantial change in the Bragg wavelength of the grating produced is quite small, the range of Bragg wavelengths of the gratings produced is not limited by the angular rotation or by the length of the mirrors 4, 5. The three gratings whose Bragg wavelengths are situated close together, shown in the centre of Figure 4, were written and superimposed in the same common location in the waveguide by simply rotating the screw during writing of the gratings. Since the screw adjustment can be made simply and rapidly it is not even necessary to switch off the UV beam between the writing of two gratings.

In order to demonstrate the repeatability of the grating producing apparatus of the present invention two gratings were written whose respective Bragg wavelengths differed by 225nm. The first grating was written in the zero position, the second grating was written after having rotated the reflectors the correct amount. After writing the second grating, the reflectors were returned to the zero position and a third grating was written, with the reflectors in the zero position. The Bragg wavelengths of the first and third gratings both written with the mirrors in the zero position, were compared. Figure 4, Inset 2 shows the transmission spectra of the first and third gratings written before and after moving and returning to the zero reference position, where it can be seen that the two Bragg wavelengths are only 1nm apart. This means that using this apparatus, gratings written at the reference position can be matched to within less than 0.5% of the change in Bragg wavelength of the second grating written. This error, however small, is due primarily to the slop in the adjustment and coarse measurement of the reference position by measurement, or even by visual alignment, and may be made negligible by a more precise set-up. Nevertheless, with minor adjustment, the Bragg wavelength written in the reference position can be matched once the mirrors have been returned to the reference position, by observing the Bragg wavelength being written in real time, and adjusting the mirrors slightly to achieve the precise reference Bragg wavelength.

Not only is the repeatability shown to be good, but the repositioning of the optical fibre and the adjustment of the reflectors is carried out in less than one minute.

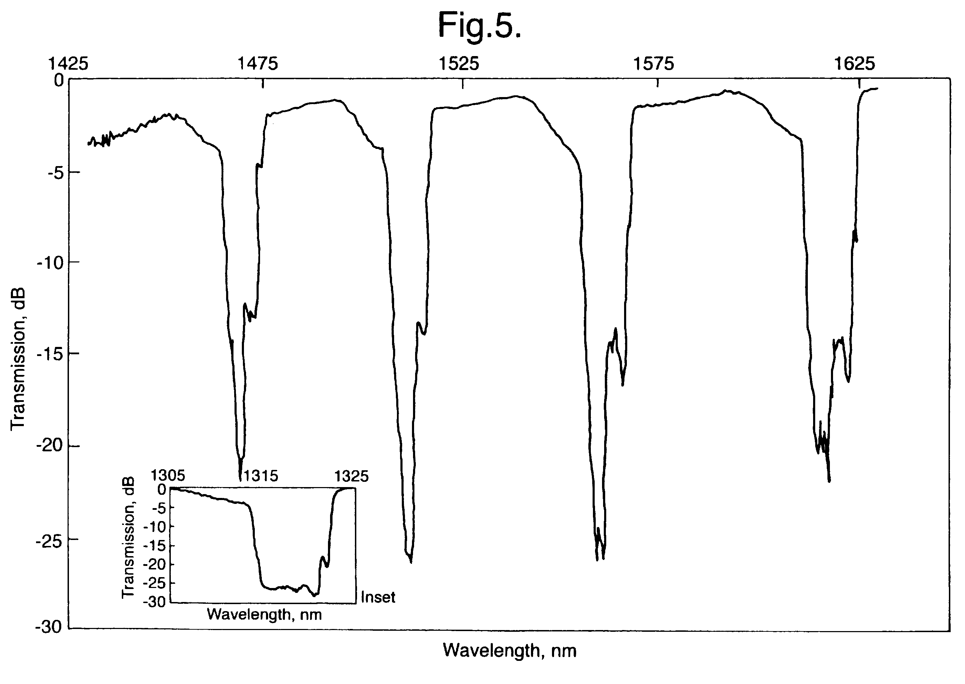

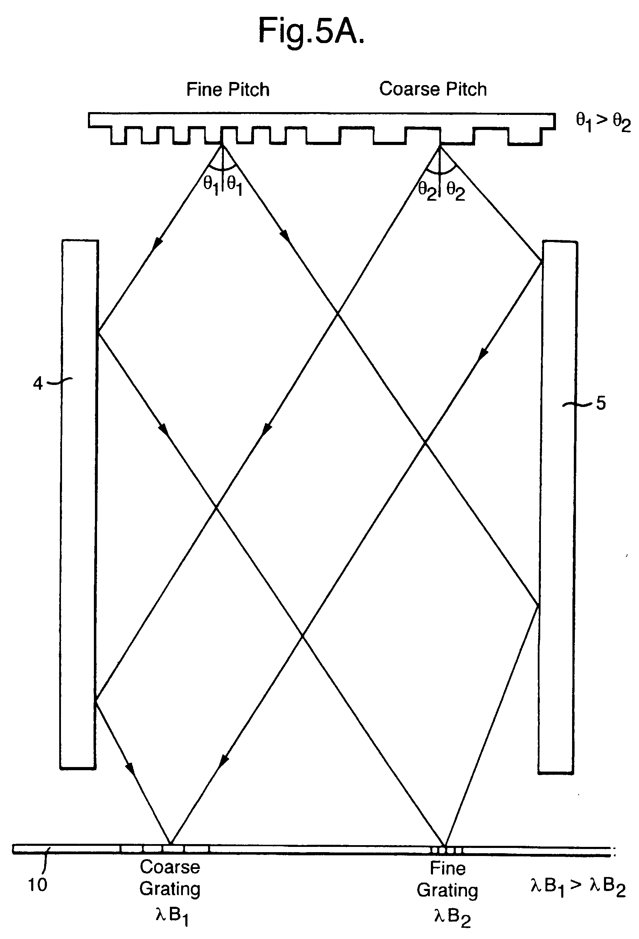

Figure 5 shows four linearly chirped gratings written according to the present invention. With respect to chirped gratings reference is made to Kashyap, McKee, Campbell and Williams, "A novel method of writing photo-induced chirped Bragg gratings in optical fibres", Electronics Letters, 9th June 1994, vol.12, no. 12, pages 996-997.The four

EP 0 978 738 A1

linearly chirped gratings of Figure 5 were written using one single common phase mask designed for 1540nm radiation with a chirp of 12nm written, according to the present invention, in the 1500nm telecommunications transmission window.

A chirped phase mask is used to produce a chirped grating. A chirped phase mask is one whose periodicity is not constant along its length. Figure 5A shows what happens to the incident UV beam as it passes through a chirped grating and how the split beams diffracted at different angles, theta1 and theta2 are recombined to form an interference pattern in the waveguide.

As shown in Equation 1, the periodicity of the phase mask and the Bragg wavelength of the grating produced are proportional. As can be seen in Figure 5A, UV radiation incident on the part of the chirped phase mask whose periodicity is smaller (fine pitch) is diffracted through angle theta1. In accordance, with Equation 1, UV radiation incident on a part of the phase mask whose periodicity is larger (coarse pitch), is diffracted through a smaller angle theta2. The angle the UV light is diffracted off the phase mask is determined by the wavelength of the incident UV beam and the spacing of the phase mask lines, the pitch, which appear as diffraction grating slits to the incident UV wavefront. The split beams are reflected by the mirrors and recombined at different angles: the split beams from the fine pitch portion of the phase mask recombining to produce a fine grating having a shorter Bragg wavelength in the waveguide, and the split beams from the coarse pitch portion of the phase mask recombining to produce a coarse grating having a longer Bragg wavelength in the waveguide.

The bandwidth of each grating gets smaller for gratings whose Bragg wavelengths are shorter, and bigger for gratings whose Bragg wavelengths are longer. This is because if a chirped phase mask is used its periodicity (or "pitch") may change, by way of example only, from one end to the other by 1%. The grating written using this phase mask, therefore also has a periodicity which varies correspondingly from one end to the other. The bandwidth is calculated as being 1% of the Bragg wavelength. Therefore, 1% of the shorter Bragg wavelength corresponds to a bandwidth which is smaller than 1% of the longer Bragg wavelength. The difference between the Bragg wavelengths of the grating having the shortest Bragg wavelength and the grating having the longest wavelength gratings written in this example, is approximately 150nm. With one and a quarter turns of the rotation screws, the chirped Bragg grating wavelength is shifted to 1330nm (refer to the inset), showing the high precision and controllability of the writing scheme. However, when the mirrors are rotated so far to effect such a large change in the Bragg wavelength of the grating formed, the angle of incidence of the interfering beams is changed to the extent that it is necessary to realign the fibre so that the interfering beams overlap at the fibre. This realignment of the fibre between writing a grating having a Bragg wavelength of approximately 1560nm and writing a grating having a new wavelength of 1313nm, however, is extremely quick and takes less than one minute because the whole adjustment simply requires the rotation screws to be turned. No further adjustment apparatus and steps are necessary. The grating formed in this way is approximately 5mm long, but longer gratings may be written using the same mirrors.

As stated above, the bandwidth of the gratings is proportional to the inscribed Bragg wavelength. The bandwidth of this grating having a Bragg wavelength of 1313nm is 9.6nm, compared to approximately 12nm for the grating having a Bragg wavelength of 1540nm. This change in the Bragg wavelength is equivalent to a delta theta of approximately 1.3° only.

The interference pattern forming interferometer shown in Figures 2 to 5 allows the quick and simple tuning of the Bragg wavelength, while allowing widely chirped gratings to be written. In order to change the Bragg wavelength of the grating formed, it is necessary to rotate or translate only one of the mirrors, since this is sufficient to change the angle with which the interfering beams are incident on the waveguide. It has been found that a simple rotation of at least one of the mirrors 4, 5 using one adjustment allows the Bragg wavelength to change over 250nm. This interferometer provides a Bragg wavelength tunability of in excess of 800nm using a single phase mask, and is achieved by rotating the mirrors so that the change in the angle between the interfering beams is of approximately 5°.

The apparatus shown in Figure 2 using a phase mask and counter rotating mirrors 4, 5 allows wider tunability of the inscribed Bragg wavelength, as well as the capability of replicating more complex gratings such as Moire, blazed, phase-stepped or chirped.

A second example of an apparatus for the production of gratings is shown in Figure 6. This apparatus can be considered as a modification of the apparatus described with reference to Figures 2 to 5, in which like parts are designated with the same reference numbers. The interfering beams interfere to form an interference pattern which is recorded in the waveguide 10 in the manner generally as previously described. In addition to the counter-rotatable and laterally translatable movement of the mirrors, an oscillator is further provided. In the example, a piezoelectric oscillator is shown, however other any other mechanical oscillators such as loud speaker coils or vibrators may be used. The oscillation provided by the piezoelectric oscillator, oscillates the mirrors 4 and 5 about the same axis about which they may be rotated in a reciprocal rotation, as described previously and shown by arrow 6 in Figure 6.In addition to being oscillated whilst in the zero position, the mirrors may also be oscillated by the piezoelectric element having already been rotated and held at a predetermined "fixed" position, as previously described.

The reciprocal rotation provided by the piezoelectric oscillator is very small, of the order of submicrons, but

7

may also be greater. The frequency of the piezoelectric oscillation is in the range from Hertz to kiloHertz. The main consideration in determining the period of the piezoelectric oscillation is that the oscillation period has to be small in comparison to the time it takes to write the grating, which is of the order of 10s of seconds. The grating produced is determined by the time-averaged summation of the oscillating interference beams.

The effect of oscillating the mirrors is to apodise (or modify) the grating being written. In particular, when several gratings are written in the same portion of fibre, it is necessary to suppress the side lobes of each grating formed in order to preserve each grating's characteristic Bragg wavelength reflectivity.

By oscillating the reflectors, two different, time-averaged interference patterns, and hence two gratings are effectively written. As a result of the oscillation, the first interference pattern has fringes differing very slightly from the second interference pattern, and wherein over the same length of waveguide where the beams overlap, the second interference pattern, whose interference fringes are slightly further spaced, has an extra period than the first interference pattern, whose interference fringes are slightly closer spaced. This has the effect when the two time-averaged interference patterns are summed together, they are out of phase at their edges, yet are strongly in phase at their centres. The characteristic of the final grating produced in the waveguide is determined by adding together the two interference patterns. The in phase interference pattern in the centre constructively interferes to write over time a grating having a strongly reflected Bragg wavelength, whereas the out-of-phase interference patterns at the edges destructively interfere to reduce the visibility of the fringes at the edge of the grating to zero, and thus suppress the side lobes.

The extent to which the side lobes are suppressed is dependent on both the magnitude and the frequency of the piezoelectric oscillation.Therefore, as the grating is being written it is apodised (or modified) In addition, this apparatus is also valuable for manufacturing short gratings measuring a few millimetres without the use of an apodised phase mask (which traditional techniques have required).

Alternatively, the grating produced may also be apodised without having to oscillate the mirrors. A first grating may be written in the waveguide. A subsequent grating is written in the waveguide, having moved the mirrors very slightly in opposite directions with respect to one another. Hence, two discrete gratings are formed in the same portion of waveguides, whose Bragg wavelengths differ very slightly. The resultant reflective characteristic of these two discrete superimposed gratings is that the second grating, by virtue of being out of phase at the edges of the grating with the first grating also suppresses the side lobes, thus reinforcing the Bragg wavelength of the first grating formed.

Figure 7 shows how a uniform grating is written into the waveguide. As can be seen from Figure 7a, the writing ultraviolet beams impinge on the fibre core (or on the inner cladding where this is the photosensitive region of interest). The grating written in the fibre is not symmetrical across the width of the fibre due to the one-sided, non-uniform exposure of the fibre to the incident radiation. If, however, during the writing of the grating or after a first initial exposure, a relative rotation between the waveguide to be written and the incident radiation is introduced, the exposure of the core can be made uniform and the grating formed in the core or cladding can also be made uniform. This may be achieved either by rotating the fibre in which the grating is being written about its longitudinal axis or by rotating the incident radiation about the longitudinal axis of the waveguide. Alternatively, uniform exposure may be achieved by making several "flash" exposures and rotating the fibre or source between exposures.

By making the grating more symmetrical across the width of the fibre, by rotating the waveguide, either as exposure takes place or between a first and subsequent exposures, the radiation mode coupling is greatly reduced Radiation mode coupling produces an overall loss from the waveguide. The transmission spectrum of the radiation in the grating written waveguide is non-uniform. In particular, wavelengths shorter than the Bragg wavelength passing through the waveguide may be coupled out of the waveguide as they are transmitted through the region of the waveguide where the grating has been written. Radiation mode loss occurs because the asymmetric exposure has the effect similar to that of a blazed grating which couples the guided mode to odd symmetry radiation modes, which has the effect of increasing loss at the short wavelength side of Bragg wavelength. If the grating is made symmetrical across the width of the waveguide, coupling to odd modes is eliminated. If the grating is not symmetrical across the width of the waveguide, however, the radiation mode coupling of shorter wavelengths corresponds to a significant loss.

The aforementioned rotation technique is particularly important for longer gratings since the longer the grating the larger the distance over which mode coupling occurs and hence, the larger the loss.

Further to this problem, it is stated that, radiation mode coupling to even modes is not, however, eliminated by having a grating symmetrical across the width of the waveguide. To eliminate coupling to both even and odd modes, one of our previous applications A25096 proposes a cladding photosensitive fibre If such a cladding photosensitive fibre is used, by rotation of the fibre, both even and odd radiation mode coupling is reduced.

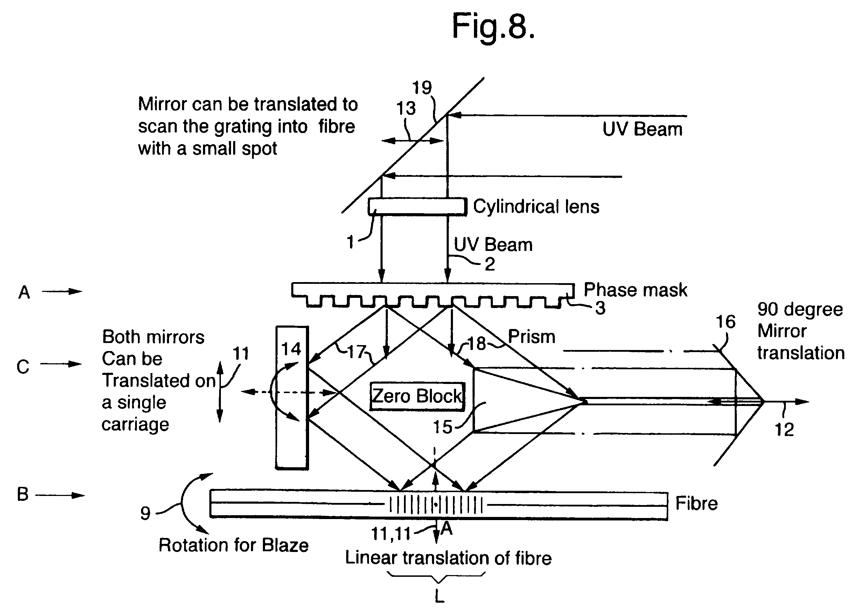

Figure 8 shows a further embodiment of the invention. The apparatus can be considered as a modification of the apparatus described with reference to Figure 2, in which like parts are designated with the same reference numbers.

In the example shown in Figure 8, the incident beam, which possesses a degree of temporal coherence, before being split by the phase mask 3, is reflected off a mirror 19 which is translatable in the direction 13 parallel to the plane in which the cylindrical lens 1 lies. Subsequent to being reflected off mirror 19, the beam is directed through the cylindrical lens 1. The cylindrical lens 1 functions to reduce the spot size of the incident UV beam.

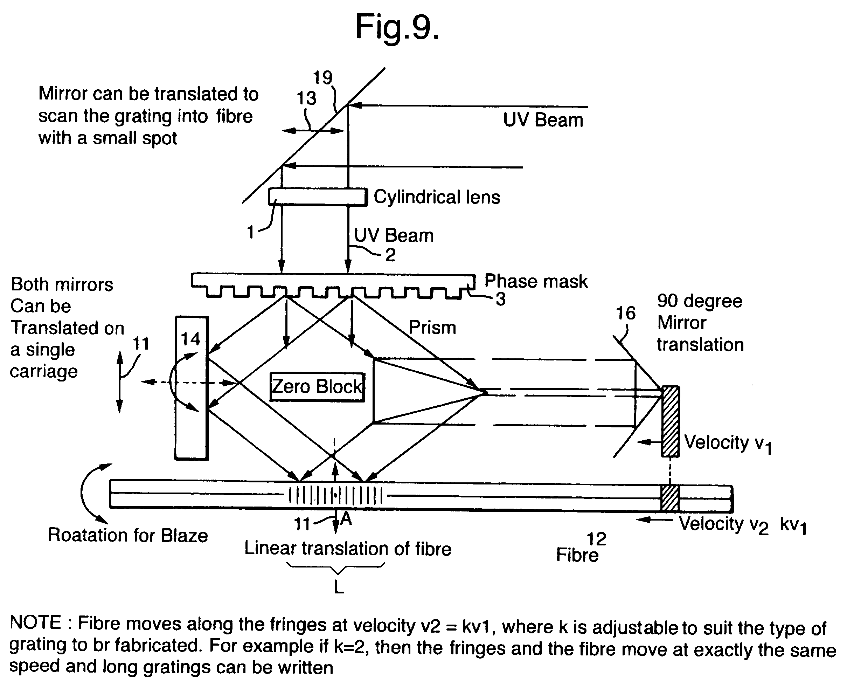

The embodiments of Figures 8 and 9 exploit the temporal coherence and coherence length of the laser source. It is known that any radiation with a non-zero line width exhibits a certain coherence length. The significance of the coherence length is that as the path difference between two split beams from the same source tends to the coherence length, the interference pattern formed by the two beams on recombining is washed out.

In the embodiments shown in Figures 8 and 9, the reflection from movable mirror 16 provides an optical path difference, or time delay, between the two beams which later recombine to form the interference pattern. Having been split, the two paths may be considered as arms in an interferometer. The combined effect of the time delay in the interferometer arms and the finite coherence length of the source is to reduce the interference fringe visibility. The interference fringe visibility decreases according to the relative delay in the two arms of the interferometer due to the optical path difference introduced by mirror 16.

In the Figure 8 example one of the interferometer mirrors 5 of the Figure 2 arrangement is replaced with a prism 15 and mirror 16. The phase mask 3 splits the UV beam into two mutually temporally coherent beams 17, 18, which both exhibit the same coherence as the incident beam. The first beam 17 is reflected, as in the Figure 2, off the mirror 4 after which it impinges on the waveguide in area A, where the interference pattern is formed. The second beam 18 passes through prism 15 to mirror 16, so as to be reflected back to the prism 15, where it is deflected again on to the waveguide in area A. As before the two beams interfere to produce an interference pattern.

In the example shown in Figure 8, for a given coherence, by reducing the beam spot size and by altering the path difference between the beams 17 and 18 split as the radiation passes through the phase mask 3, the "visibility" of the interfering beams is controlled locally. The "visibility" (v) being defined as the difference between the peak (p) and trough (t) intensities of the interference pattern divided by the sum of the peak and trough intensities of the interference pattern: or

$$v = p-t/p+t.$$

In particular, the translatable mirrors 19 and 16 are controlled to produce the shape of the visibility envelope. The visibility envelope is defined in terms of an intensity pattern, I,

I = 1 - (1/2)v cos (2pi z/period of the interference pattern formed in the waveguide),

where: v is the visibility and z is the displacement along the longitudinal axis of the waveguide)

If v is less than 1, there exists a constant background intensity. The grating produced by this intensity pattern is apodised (or modified) as a result of the shape of the visibility envelope, which as discussed is controlled by the position of the mirrors and prism. Furthermore, the shape of the envelope is controlled so that the average intensity remains constant along the length z, so that the effective refractive index is substantially constant along the length of the grating, which minimises side lobes in the grating characteristics.

With respect to the visibility envelope, reference is made to our own European patent application number 95309031.3 and Erdogan, "Fibre grating spectra", Journal of light wave technology, vol. 15, no. 5, August 1997, pages 1277-1294, Figure 2.

The apparatus shown in Figure 8 produces almost any grating in any waveguide using a single phase mask.

By translating mirror 19 in direction 13 the interference pattern is scanned into the waveguide with a small spot beam. The size of the spot is determined by cylindrical lens 1. The mirrors 19 and 16 are synchronised to move together. As the mirror 19 is translated the mirror 16 is also translated in the direction parallel to the longitudinal axis of the waveguide, shown by arrow 12 in Figure 8. Furthermore, and in addition to the mirror movements described with reference to Figure 2, both mirror 14 and prism 16 are mounted on a single carriage which is translatably movable in a direction 11 perpendicular to the plane in which the cylindrical lens is disposed and perpendicular to the longitudinal axis of the waveguide. This ensures that greater versatility is achieved, as the mirrors can be moved to reflect both beams diffracted from the phase mask at both very large angles from closely spaced phase mask lines, and very small angles from widely spaced phase mask lines. This is achieved with a simple adjustment.

Figure 9 shows a further embodiment of the invention. The apparatus can be considered as a modification of the apparatus described with reference to Figure 8, in which like parts are designated with the same reference numbers.

The apparatus shown in Figure 9 can be used to produce gratings of almost any length. It is particularly suitable for producing long and ultra long chirped gratings of up to 1 metre or longer. Such long gratings can be useful in dispersion compensation in optical fibre transmission systems. The apparatus shown in Figure 9 further allows the production of continuously chirped gratings having any desired apodisation profile.

In Figure 9, the components have all the same degrees of movement as those described with reference to Figure 8. However, in addition to these the waveguide is arranged for movement also in the same direction 12 as the mirror 16, parallel to the longitudinal axis of the waveguide, while the interference pattern is being formed in the waveguide. As the waveguide moves in the same direction as the mirror 16 a continuous grating is formed. The translation stage is accurately controllable to control the relative movement between the waveguide and the mirror 16. By way of example, the stage may be controlled using an interferometric control, whereby a separate monitor laser is used to measure the position of the stage relative to some reference.

The relative movement is now described. The waveguide moves at a velocity v through the location L, where the two split beams overlap and the interference fringes are combined and written as a grating, wherein = k v1, where v1 is the velocity of the mirror 16 and k is either a constant or a variable depending on the type of grating being produced, and hence depends on the phase mask. For example, if a phase mask with a constant line spacing is used to write a constant spacing grating, then k may be equal to 2, In this case the fringes and the waveguide then move at exactly the same speed in the direction 12. This technique enables the writing of long gratings of up to 1 metre or longer. If, for example, however, a chirped grating is to be produced from a linear non-chirped phase mask, k would vary. It is then necessary to vary the relative movement between the waveguide and the mirror. The velocity of the mirror 16, in this case, is controlled.

Possible applications for such dispersion compensating gratings are in WDM, long distance and high speed transmission and networks.

Many modifications and variations to the described examples falling within the scope of the claimed invention are possible.

## Claims

1. An apparatus for generating a first interference pattern to be written as a grating in a sample of a photosensitive material, the apparatus comprising:

   a first zone including a first optical means, arranged to receive an optical input beam, for generating a second interference pattern from said optical input beam,
   a second zone including a location to receive a sample of the photosensitive material on which material said first interference pattern is incident, in use, to write said grating,
   a third zone disposed between said first and second zones including a second optical means for tuning said second interference pattern before it is incident as said first interference pattern on said sample of photosensitive material.

2. An apparatus according to claim 1, wherein said location and said first optical means are aligned with each other and face one another.

3. An apparatus according to claims 1 or 2, wherein, in use, said second optical means directs said first interference pattern away from said first optical means.

4. An apparatus according to any of preceding claims 1-3, wherein said first optical means comprises a phase mask.

5. An apparatus according to claim 4, wherein said phase mask carries either a chirped or a non-chirped phase mask pattern.

6. An apparatus according to any one of the preceding claims, wherein said second interference pattern generated by said first optical means comprises at least two sub-beams, wherein said second optical means tunes said second interference pattern by combining said at least two sub-beams at a tunable angle to form said first interference pattern.

7. An apparatus according to any of claims 1-6, wherein said second optical means comprises at least two reflectors, and moving means for moving at least one of said reflectors with respect to said other reflector(s).

8. An apparatus according to claim 7, wherein said moving means comprises a means to rotate at least one of said reflectors relative to said other reflectors.

9. An apparatus according to claim 7 or 8, wherein said moving means comprises a translating means for translating at least one of said reflectors with respect to said other reflectors.

10. An apparatus according to claim 8, wherein said photosensitive material has a longitudinal axis along which it is located at said location, wherein said means to rotate is arranged in use to rotate at least one of said reflectors with respect to said other reflectors about an axis perpendicular to both said longitudinal axis and the direction of said optical input beam.

11. An apparatus according to any of claims 1-10, wherein said second optical means comprises a grating modifying means for modifying said first interference pattern as said grating is being written, so as to modify said grating as it is being written.

12. An apparatus according to claim 11, wherein said grating modifying means comprises an oscillating means for oscillating at least one of said reflectors.

13. An apparatus according to claim 12, wherein said oscillating means is a piezoelectric oscillator.

14. An apparatus according to any of claims 11-13, wherein said grating modifying means comprises means for introducing a path difference between said sub-beams to control, on combining, the visibility envelope of said first interference pattern.

15. An apparatus according to any of claims 11-14, wherein said grating modifying means comprises means for moving at least one of said reflectors and said photosensitive material, with respect to one another in coupled motion in the direction of said longitudinal axis of said photosensitive material as the grating is being written.

16. An apparatus according to any of claims 1-15, further comprising a first tilting means for tilting either said location at which said photosensitive material is received with respect to said second optical means and said first optical means, or said first optical means with respect to said second optical means and said location.

17. An apparatus according to any of claims 1-16, wherein said photosensitive material is received at said location along a longitudinal axis of said photosensitive material, and wherein said apparatus further comprises means to rotate said photosensitive material about said longitudinal axis as said grating is written.

18. An apparatus for the production of gratings in a photosensitive material, the apparatus comprising:

   a first zone including a phase mask, arranged to receive an optical input beam, for splitting said input beam into at least two sub-beams,
   a second zone including a location to receive a sample of the photosensitive material, and
   a third zone disposed between said first and second zones and including a recombining means for recombining said sub-beams, the recombining means being operable to adjust the angle at which said sub-beams recombine, so that said sub-beams form an interference pattern at said location to produce a grating in said photosensitive material, to permit the interference pattern to be tuned.

19. A method for generating a first interference pattern to be written as a grating in a sample of a photosensitive material, the method comprising the steps of:

   receiving an optical input beam in a first zone and optically generating a second interference pattern from said optical input beam,
   locating a sample of said photosensitive material on which said first interference pattern is to be incident to write said grating at a location in a second zone, and, in a third zone disposed between said first and second zones,
   optically processing said second interference pattern before it is incident as said first interference pattern on said sample of photosensitive material.

20. A method according to claim 19, wherein said optical processing step is carried out by reflecting said second interference pattern with at least two reflector.

21. A method according to claim 19 or 20, wherein said first and second interference patterns are the same.

22. A method for the production of gratings in a photosensitive material, comprising the steps of:

   locating a sample of said photosensitive material in a first zone,

passing an incident beam of radiation through a phase mask disposed in a second zone to produce at least two sub-beams,
and
recombining said at least two sub-beams at a tuneable angle in a third zone disposed between said first and second zones, so that said at least two sub-beams form an interference pattern at said location to produce a grating in said photosensitive material.

Fig.1.

# Fig.2.

# Fig.3.

Fig.4.

EP 0 978 738 A1

# Fig.5.

Transmission, dB

Wavelength, nm

1425    1475    1525    1575    1625

Inset

1305    1315    1325

Transmission, dB

Wavelength, nm

EP 0 978 738 A1

# Fig.5A.

Fine Pitch          Coarse Pitch

$\theta_1 > \theta_2$

$\theta_1 | \theta_1$          $\theta_2 | \theta_2$

4                    5

10

Coarse          Fine
Grating         Grating
$\lambda B_1$          $\lambda B_2$

$\lambda B_1 > \lambda B_2$

# Fig.6.

# Fig.7a.

# Fig.7b.

# Fig.8.

Mirror can be translated to scan the grating into fibre with a small spot

19
13

UV Beam

Cylindrical lens

1

UV Beam
2

A ⟶

Phase mask
3

Both mirrors
Can be
Translated on
a single
carriage

14    17    18    Prism

11

C ⟶

Zero Block

16    90 degree
Mirror
translation

15

12

B ⟶

9

|||||||·||||||    Fibre

Rotation for Blaze

11,11    A
Linear translation of fibre

L

EP 0 978 738 A1

# Fig.9.

Mirror can be translated to scan the grating into fibre with a small spot

UV Beam

Cylindrical lens

UV Beam ~2

Phase mask ~3

Both mirrors Can be Translated on a single carriage

Zero Block

Prism

90 degree Mirror translation

Velocity $v_1$

Roatation for Blaze

Linear translation of fibre

L

Velocity $v_2$ $kv_1$

Fibre

NOTE : Fibre moves along the fringes at velocity v2 = kv1, where k is adjustable to suit the type of grating to br fabricated. For example if k=2, then the fringes and the fibre move at exactly the same speed and long gratings can be written

EP 0 978 738 A1

# EP 0 978 738 A1

**European Patent Office**

## EUROPEAN SEARCH REPORT

Application Number

EP 98 30 6183

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE 196 05 062 C (UNIV DRESDEN TECH) 28 August 1997 | 1-8, 10-12, 14,15, 18-22 | G02B6/16 |
| A | * the whole document * | 9,13 | |
| X,D | WO 97 22023 A (BRITISH TELECOMM ;KASHYAP RAMAN (GB)) 19 June 1997 * abstract; figures 6-8 * * page 6, line 10 - page 7, line 20 * * page 13, line 25 - page 14, line 15 * | 18,22 | |
| A | | 1,13,16 | |
| A,D | CORTES P -Y ET AL: "INTRINSIC APODISATION OF BRAGG GRATINGS WRITTEN USING UV-PULSE INTERFEROMETRY" ELECTRONICS LETTERS, vol. 34, no. 4, 19 February 1998, page 396/397 XP000773797 * abstract; figure 1 * | 1,4-8, 10-12, 14,15, 18-22 | |
| A,D | WO 86 01303 A (UNITED TECHNOLOGIES CORP) 27 February 1986 * abstract; figure 4 * * page 1, line 25 - page 2, line 2 * * page 3, line 8 - line 24 * | 1,9 | **TECHNICAL FIELDS SEARCHED (Int.Cl.6)**<br>G02B |

The present search report has been drawn up for all claims

| Place of search | Date of completion of the search | Examiner |
|---|---|---|
| THE HAGUE | 8 January 1999 | Jakober, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

                                                         

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 98 30 6183

This annex lists the patent family members relating to the patent documents cited in the above-mentioned European search report.
The members are as contained in the European Patent Office EDP file on
The European Patent Office is in no way liable for these particulars which are merely given for the purpose of information.

08-01-1999

| Patent document cited in search report | | Publication date | Patent family member(s) | | Publication date |
|---|---|---|---|---|---|
| DE 19605062 | C | 28-08-1997 | NONE | | |
| WO 9722023 | A | 19-06-1997 | CA | 2239730 A | 19-06-1997 |
| | | | EP | 0866989 A | 30-09-1998 |
| | | | CA | 2241544 A | 24-07-1997 |
| | | | EP | 0875013 A | 04-11-1998 |
| | | | WO | 9726570 A | 24-07-1997 |
| WO 8601303 | A | 27-02-1986 | DE | 3586052 A | 17-06-1992 |
| | | | EP | 0191063 A | 20-08-1986 |
| | | | JP | 2521708 B | 07-08-1996 |
| | | | JP | 62500052 T | 08-01-1987 |
| | | | US | 4807950 A | 28-02-1989 |
| | | | US | 4725110 A | 16-02-1988 |

EPO FORM P0459

For more details about this annex : see Official Journal of the European Patent Office, No. 12/82